# EUROPÄISCHE PATENTSCHRIFT

(11) **EP 1 356 224 B1**
(45) Veröffentlichungstag und Bekanntmachung des Hinweises auf die Patenterteilung: **28.03.2007**
(21) Anmeldenummer: 02710047.8
(22) Anmeldetag: 29.01.2002
(51) Int. Cl.: F16L 7/00, E21B 7/28

(54) **ROHRBÜNDEL UND VERFAHREN ZUR PARALLELVERLEGUNG VON ROHREN NACH DEM BOHR-SPÜLVERFAHREN**
BUNDLE OF PIPES AND METHOD FOR PARALLEL ARRANGEMENT OF PIPES ACCORDING TO A BORE AND SWIVEL METHOD
FAISCEAU DE TUBES ET PROCEDE DE POSE PARALLELE DE TUBES SELON LE PROCEDE DE FORAGE/INJECTION

(30) Priorität: 30.01.2001 DE 10103859
(43) Veröffentlichungstag der Anmeldung: 29.10.2003
(73) Patentinhaber: Stadtwerke Schwerte GmbH, 58239 Schwerte (DE)
(72) Erfinder: JOHN, Martin, 58239 Schwerte (DE); ROUS, Klaus, 44267 Dortmund (DE)
(74) Vertreter: Schneider, Uwe
(86) Internationale Anmeldenummer: PCT/EP2002/000891
(87) Internationale Veröffentlichungsnummer: WO 2002/061319

(56) Entgegenhaltungen:
- DE-A- 3 544 258
- DE-A- 19 901 536
- DE-A1- 10 103 859
- DE-U- 20 006 674
- GB-A- 2 245 331
- US-A- 5 505 558
- US-E- R E34 978

## Beschreibung

Die Erfindung betrifft ein Rohrbündel gemäß Oberbegriff des Anspruches 1 und ein Verfahren zur parallelen Verlegung von Rohren nach dem Bohr-/Spülverfahren gemäß Oberbegriff des Anspruches 19.

Das Verlegen von Rohren nach dem sogenannten Horizontal-Bohr-/Spülverfahren wird zunehmend eingesetzt, um mit möglichst wenig Baumaßnahmen an der Oberfläche beispielsweise auch im dicht bebauten Innenstadtbereich Rohre oder auch Kabel verlegen zu können. Insbesondere durch die Verwendung sogenannter gesteuerter Bohrverfahren bietet das Bohr-/Spülverfahren eine wirtschaftliche und schnelle Alternative zur herkömmlichen Verlegung von Rohren und Kabeln im offenen Graben. Das Anwendungsspektrum erstreckt sich auf viele Rohr-Baumaßnahmen im Rahmen der Gas-, Femwärme- und Trinkwasserversorgung sowie der Verlegung von Abwasserdruckleitungen sowie Kabelschutzrohren für Fernseh- oder Telekommunikation, Verkehrsleitsysteme, Notrufsäulen oder für Nieder-, Mittel-, Hochspannungskabel und Lichtwellenleiter. Auch ist etwa das Unterqueren von Flüssen, Kanälen, Autobahnen, Gleisstrecken oder dgl. ohne Behinderung des Betriebes möglich.

Beim Bohr-/Spülverfahren wird in einem ersten Durchgang mit einem Bohr-/Spülkopf ein bezüglich des Querschnittes relativ kleiner Bohrkanal aufgebohrt, der über Sonden gesteuert möglichst den gewünschten Verlauf unterhalb einer Oberfläche aufweist. Ist der erste Bohrkanal hergestellt, so wird in einem oder mehreren Zügen dieser Bohrkanal durch entsprechenden Aufweitköpfe auf das benötigte Querschnittsmaß erweitert, üblicherweise erfolgt diese Erweiterung beim Rückziehen des Bohr-/Spülkopfes nach dem ersten Durchgang. Hierzu wird der ursprüngliche Bohr-/Spülkopf durch einen am Umfang fräsenden Aufweitkopf ersetzt, der in Rückzugsrichtung den Bohrkanal auffräst. Hierzu wird weiterhin unter Hochdruck Wasser an die Bohrstelle eingespritzt, wobei etwa auch Zusätze von sogenanntem Bentonit zu einer Verbesserung des Bohrverhaltens und einer Verfestigung des Bohrkanals beitragen. Gegebenenfalls wird dieser Vorgang der Querschnittvergrößerung mehrfach wiederholt. Beim letzten derartigen Vorgang wird üblicherweise dann das einzuziehende Rohr oder dgl. an den Aufweitkopf angehängt, so daß nach dem vollständigen Durchfahren des nunmehr erweiterten Bohrkanales die benötigte Bestückung des Bohrkanales mit dem Rohr fertig vorliegt.

Zur weiteren Rationalisierung wird zunehmend versucht, in einem Bohr-/Spülgang nicht nur ein Rohr zu verlegen, sondern möglichst gleich mehrere Rohre im gleichen Durchgang einzuziehen. Dies ist insbesondere dann sinnvoll, wenn beispielsweise im Rahmen von Sanierungsmaßnahmen unterschiedliche Rohre mit unterschiedlichen Funktionen gleichzeitig neu verlegt werden sollen, weiterhin wird dadurch der benötigte Bauraum etwa innerhalb einer Straße besser ausgenutzt, als wenn in mehreren einzelnen Bohrvorgängen jeweils in größeren Abständen voneinander die einzelnen Rohre separat verlegt werden müssen. Problematisch bei diesem kombinierten Verlegen mehrerer Rohre innerhalb eines durch die Bohr-/Spültechnik geschaffenen Bohrkanales ist es, daß beim Einziehen mehrerer Rohre aufgrund der Drehbewegung des Bohr-/Fräskopfes bzw. des Aufweitkopfes die Rohre in der Regel über die Verlegelänge auf Torsion belastet werden und sich daher zueinander verdrillen. Dies führt zum einen zu einer starken Belastung des Materials der Rohre, wodurch entweder die Rohre brechen können oder durch Knickungen nicht mehr durchgängig sind, zum anderen ist die Lage der Rohre zueinander bzw. zur Oberfläche am Einbauort vollkommen unbestimmt. Dies ist insbesondere dadurch problematisch, daß etwa beim kombinierten Einziehen von Gas-, Wasser- und Leerrohren für Telekommunikation und dgl. der Anschluß von Verbrauchern dann problematisch wird, wenn aufgrund der Verdrillung etwa die Gas- und Wasserrohre an der Abgangsstelle gerade unterhalb der Leerrohre für die Telekommunikation verlaufen. Dadurch wird z.B. das Anbringen von T-Stücken oder Abzweigungen problematisch, wodurch zusätzliche Baumaßnahmen an den jeweiligen Abgangsstellen erforderlich werden, die das Gesamtverfahren deutlich verteuern. Auch kann es passieren, daß die Rohre einen vorzugebenden Abstand zueinander nicht einhalten, so daß entsprechender Einbauraum für Armaturen etc. nicht ausreichend vorliegt.

Aus der DE 200 06 674 U1 ist ein Rohrschellensystem zur Festlegung einer Anzahl von Rohren aneinander in Form eines Rohrbündels bekannt. Aus der gattungsbildenden DE 199 01 536 A1 ist weiterhin ein Verfahren zur grabenlosen Parallelverlegung von Rohren mittels zweier miteinander gekoppelter Microtunneling-Maschinen bekannt.

Aufgabe der vorliegenden Erfindung ist es daher, ein Rohrbündel bzw. ein Verfahren zur parallelen Verlegung von Rohren nach dem Bohr-/Spülverfahren derart weiterzuentwickeln, daß eine Verlegung auch von mehreren Rohren gleichzeitig ohne Verdrillung des Rohrbündels bzw. Veränderung der Abstände der Rohre zueinander erfolgen kann, so daß das eingezogene Rohrbündel immer in definierter räumlicher Lage relativ zueinander und zur Umgebung verlegt wird.

Die Lösung der erfindungsgemäßen Aufgabe ergibt sich hinsichtlich des Rohrbündels aus den kennzeichnenden Merkmalen des Anspruches 1 und hinsichtlich des Verfahrens aus den kennzeichnenden Merkmalen des Anspruches 19 jeweils in Zusammenwirken mit den Merkmalen des zugehörigen Oberbegriffes. Weitere vorteilhafte Ausgestaltungen der Erfindung ergeben sich aus den jeweiligen Unteransprüchen.

Die erfindungsgemäße Lösung gemäß Anspruch 1 geht aus von einem Rohrbündel zur Verlegung von Rohren mittels grabenloser Verlegung nach dem Bohr-/Spülverfahren, bei dem in einem ersten Bohrvorgang ein Bohrkanal erzeugt und beim Rückziehen eines dem Rohrbündel zugeordneten Bohr-/Spülkopfes dieser Bohrkanal aufgeweitet und dabei das Rohrbündel in den Bohrkanal eingezogen wird- Ein derartiges Rohrbündel wird dadurch in erfindungsgemäßer Weise weiterentwickelt, daß das Rohrbündel aus einer Anzahl von einzelnen Rohren über in Längsrichtung der Rohre in Abständen an den Rohren angeordnete und die Rohre zueinander beabstandende Flansche gebildet ist, wobei die Flansche auch gegenüber Belastungen in Längsrichtung der Rohre beim Einziehen des Rohrbündels in den Bohrkanal gesichert sind und an dem rotierenden Bohr-/Spülkopf ein nicht mitrotierender, mit dem Rohrbündel verbundener Aufweitkonus derart angeordnet ist, daß der Aufweitkonus beim Rückziehen den vom Bohr-/Spülkopf erzeugten Bohrkanal auf für das Verlegen des Rohrbündels benötigte Querschnittsmaße aufweitet und die räumliche Lage des Rohrbündels relativ zur Umgebung stabilisiert. Hierdurch werden die Rohre entsprechend den Abständen der Flansche zueinander aneinander festgelegt und können sich daher nicht mehr oder nicht mehr unzulässig relativ zueinander verschieben. Hierdurch wird weiterhin ein wesentlich steiferer Verband der einzelnen Rohre gebildet, der gegenüber Verdrillungen und Torsionen wesentlich widerstandsfähiger ist als die nicht aneinander festgelegten einzelnen Rohre beim herkömmlichen gleichzeitigen Einziehen mehrerer Rohre. Hierdurch verdrillt sich das Rohrbündel selbst auch bei konventionellem Einziehen in einen Bohrkanal nach dem Bohr-/Spülverfahren nicht so stark, wie dies bei Verlegung einzelner, nicht aneinander festgelegter Rohre der Fall ist. Auch ist diese Ausgestaltung der Erfindung selbstverständlich sinngemäß auch auf das Einziehen nur eines Rohres übertragbar, wenn etwa Torsionsbelastungen zu unzulässigen oder nicht wünschenswerten Materialbelastungen führen würden. Eine wesentliche Verbesserung beim Verlegen von Rohrbündeln läßt sich dadurch erreichen, daß an dem rotierenden Bohr-/Spülkopf ein nicht mitrotierender Aufweitkonus derart angeordnet ist, daß der Aufweitkonus beim Rückziehen den vom Bohr-/Spülkopf erzeugten Bohrkanal auf für das Verlegen des Rohrbündels benötigte Querschnittsmaße aufweitet und dadurch die räumliche Lage des Rohrbündels relativ zur Umgebung stabilisiert. Der nicht mitrotierende Aufweitkonus sorgt dabei für eine genaue Herstellung des Bohrkanals passend für das Einziehen des mit den Flanschen verbundenen Rohrbündels, wobei von besonderen Vorteil ist, daß in weiterer Ausgestaltung der Aufweitkonus sich beim Einziehen der Rohre flächig an die von dem Bohr-/Spülkopf erzeugten, mit Schlamm bedeckten Wandungen des Bohrkanals anpreßt und an diesen abstützt und die räumliche Lage des Aufweitkonus' relativ zur Umgebung stabilisiert ist. Hierdurch ist sicher gewährleistet, daß das an dem Aufweitkonus festgelegte Rohrbündel nicht der von dem Bohr-/Spülkopf erzeugten Drehbewegung unterliegt und daher nicht oder nur sehr wenig auf Torsion beansprucht wird. Die Abstützung des Aufweitkonus' an den Wandungen des Bohrkanals sowie eine entsprechende Einrichtung zur Entkopplung der Drehbewegung des Bohr-/Spülkopfes von dem Aufweitkonus fangen die Dreh-bewegung des Bohr-/Spülkopfes weitgehend auf. Gleichzeitig kalibriert der Aufweitkonus den Bohrkanal, so daß die Flansche gut durch den Bohrkanal hindurch gezogen werden und sich gleichzeitig an den Wandungen des Bohrkanales abstützen können.

Eine weitere Verbesserung der Stabilisierung des Aufweitkonus' in dem Bohrkanal läßt sich dadurch erreichen, daß der Aufweitkonus eine Anzahl, vorzugsweise symmetrisch, am Umfang verteilter, im wesentlichen axialer Ausnehmungen aufweist, die durch den hier in Längsrichtung des Bohrkanales durchtretenden Bohrschlamm die räumliche Lage des Aufweitkonus' relativ zur Umgebung stabilisieren. Der Bohrschlamm wird aufgrund der Druckverhältnisse zwischen Bohr-/Spülkopf und Aufweitkonus verdichtet und bildet zusätzlich zu der Flächenpressung an den Konusflächen des Aufweitkonus' eine nahezu formschlüssige Abstützung des Aufweitkonus'.

Von besonderen Vorteil ist es, wenn zwischen Bohr-/Spülkopf und Aufweitkonus mindestens eine Einrichtung zur Drehentkopplung angeordnet ist, die die Drehbewegung des Bohr-/Spülkopfes von dem mit dem Aufweitkonus verbundenen Rohrbündel entkoppelt. Derartige Einrichtungen können beispielsweise Drehlagerungen oder dgl. sein, die etwa aus dem Bereich der Anschlagmittel für Lastaufnahme umfänglich bekannt sind und hier daher nicht weiter beschrieben werden sollen.

Eine weitere Ausgestaltung sieht vor, daß die Flansche Abmessungen aufweisen, die kleiner sind oder zumindest abschnittsweise im wesentlichen dem Querschnitt des größten Durchmessers des Aufweitkonus' entsprechen. Hierdurch kann die schon erwähnte Abstützwirkung auch der Flansche an dem Inneren des Bohrkanales erreicht werden, da dann der Aufweitkonus den Bohrkanal entsprechend vorformt.

Die Ausgestaltung der Flansche sieht vor, daß die Flansche im wesentlichen plattenförmig ausgebildet und senkrecht zur Längsrichtung der Rohre an diesen festgelegt sind. Diese etwa an Schellen für Schlauchleitungen oder dgl. erinnernde Grundkonstruktion der Flansche bietet eine hohe Festigkeit bei der Festlegung der Flansche an den Rohren bei gleichzeitig geringem Gewicht der Flansche und damit nur unwesentlicher Erhöhung des Gewichtes des Rohrbündels gegenüber dem Gewicht der einzelnen Rohre.

Eine bevorzugte Ausgestaltung sieht vor, daß die Flansche im wesentlichen mindestens zwei plattenförmige Einzelteile aufweisen, wobei in die jeweiligen Einzelteile jeweils einander ergänzende, im wesentlichen halbkreisförmige Öffnungen eingebracht sind, in die die Rohre einlegbar und durch das jeweils zugehörige andere Einzelteil, die Rohre klemmend, verschließbar sind. Hierdurch läßt sich erreichen, daß eine einfache Montage der Rohre an den Flanschen erfolgen kann und gleichzeitig die Montage an beliebigen Stellen entlang des Rohrbündels auch noch kurz vor dem Einziehen des Rohrbündels in den Bohrkanal möglich ist. So kann etwa ein zentrales Mittelteil des Flansches zwischen die das Rohrbündel bildenden Rohre eingeschoben und die entsprechend weiteren Einzelteile dann von außen auf die Rohre und das zentrale Mittelteil des Flansches aufgesteckt und beispielsweise miteinander verschraubt oder verklemmt oder verklebt oder auf sonstige bekannte Weise aneinander befestigt werden.

Eine Ausgestaltung sieht vor, daß die Flansche in im wesentlichen regelmäßigen Abständen an den Rohren zur Bildung des Rohrbündels angeordnet sind. Hierdurch lassen sich im wesentlichen gleichmäßige Verhältnisse hinsichtlich der Stabilisierung des Rohrbündels durch die Flansche über die gesamte Länge des Rohrbündels erreichen.

Es ist aber auch denkbar, daß die Flansche unregelmäßig und insbesondere nahe an dem Aufweitkonus in geringerem Abstand, hier vorzugsweise im wesentlichen zwischen 0,5 - 2 Meter, zueinander angeordnet sind als in Einziehrichtung weiter hinter dem Aufweitkonus, hier vorzugsweise im wesentlichen zwischen 3 - 6 Meter. Insbesondere am Anfang des Rohrbündels, also nahe an dem Bohr-/Spülkopf mit seiner rotierenden Bewegung kann es wichtig sein, das Rohrbündel zusätzlich zu stabilisieren und zusätzliche Abstützungsflächen der Flansche an den Innenwandungen des Bohrkanales zur Verfügung zu stellen.

Eine Ausgestaltung sieht vor, daß die Flansche nach dem Einziehen des Rohrbündels in den Bohrkanal an dem Rohrbündel festgelegt verbleiben. Durch Verwendung sogenannter verlorener Flansche wird es unnötig, zusätzliche Baumaßnahmen zum Wiedergewinnen der Flansche auszuführen.

Es ist allerdings auch denkbar, daß die Flansche derart an dem Rohrbündel festgelegt werden, daß sie nach dem Einziehen des Rohrbündels in den Bohrkanal in von der Oberfläche jeweils vorgetriebenen Entspannungsgruben zu liegen kommen und dort wieder zugänglich von dem Rohrbündel demontierbar sind. Da bei der Bohr-/Spültechnik häufig in bestimmten Abständen sogenannte Entspannungsgruben vorgesehen werden, an denen der entstehende Bohrschlamm abgesaugt wird, gleichzeitig auch etwa im Bereich der Hausanschlußtechnik ohnehin an voneinander beabstandeten Stellen Abzweige für die Versorgungsleitungen der Häuser etc. benötigt werden, kann die Anordnung der Flansche an dem Rohrbündel genau so erfolgen, daß beim bestimmungsgemäßen Einziehen des Rohrbündels die Flansche etwa in diesen Entspannungsgruben zu liegen kommen. Hierdurch können die Flansche nach dem Einziehen wieder demontiert und wiederverwendet werden, wodurch die Kosten für die Herstellung der Flansche auf entsprechend viele Einsatzfälle umgelegt werden können.

Eine weitere Stabilisierung des Rohrbündels innerhalb des Bohrkanales läßt sich dadurch erreichen, daß in den Flanschen Öffnungen in dem von den Rohren umgrenzten Bereich der Flansche derart angeordnet sind, daß von dem Bohr-/Spülkopf erzeugter Bohrschlamm in den zwischen zwei zueinander benachbarten Flanschen gebildeten Raum eintreten und diesen im wesentlichen ausfüllen kann. Insbesondere wenn dem Bohrschlamm, wie beim Bohr-/Spülverfahren üblich, sogenanntes Bentonit zugesetzt wird, wird durch den zwischen den zueinander benachbarten Flanschen eingetretenen Bohrschlamm das Rohrbündel zusätzlich gegenüber möglicherweise noch über den Aufweitkonus hinweg geleitete Torsionsbelastungen abgestützt. Dies wird in vorteilhafter Weise im wesentlichen durch den Druckaufbau des Bohrschlamms in diesem Raum bewirkt, der das Rohrbündel in seiner räumlichen Lage zur Umgebung stabilisiert.

Weiterhin ist davon auszugehen, daß die Außenkanten der Flansche sich an den von dem Aufweitkopf erzeugten Wandungen des Bohrkanales derart abstützen, daß die Flansche und die daran festgelegten Rohre beim Einziehen des Rohrbündels von der Innenwandung des Bohrkanales geführt entlang gleiten, wobei ebenfalls der Bohrschlamm als Gleitmittel bei der Bewegung der Flansche auf den Wandungen des Bohrkanals wirkt. Hierdurch wird das leichte Einziehen des Rohrbündels zusätzlich unterstützt und gleichzeitig die Torsionsbelastung des Rohrbündels durch die gute Abstützung an den Wandungen des Bohrkanals weiter vermindert.

Eine weitere Verbesserung der Abstützwirkung läßt sich dadurch erreichen, daß die Umrißform der Flansche unregelmäßig ausgebildet ist. Hierzu trägt bei, daß die unregelmäßige Umrißform der Flansche eine Verfestigung des Bohrschlamms angrenzend an diese unregelmäßigen Formen bewirkt, wodurch die Flansche von diesem verfestigten Bohrschlamm gegen Verdrehungen geführt an der Innenwandung des Bohrkanals entlanggleiten. Ähnlich wie auch schon bei der Ausgestaltung des Aufweitkonus' mit entsprechenden Ausnehmungen verfestigt sich der Bohrschlamm auch in diesen unregelmäßig geformten Bereichen der Flansche und bildet damit eine zusätzliche formschlüssige Abstützung des Rohrbündels im Bereich der Flansche.

Die Erfindung betrifft weiterhin ein Verfahren gemäß Anspruch 19 zum parallelen Verlegen von Rohren mittels grabenloser Verlegung nach dem Bohr-Spülverfahren, bei dem in einem ersten Bohrvorgang ein Bohrkanal aufgespült und beim Rückziehen des Bohr-/Spülkopfes dieser Bohrkanal aufgeweitet und dabei ein Rohrbündel in den Bohrkanal eingezogen wird. Dies kann selbstverständlich auch insbesondere ein Verfahren zum Verlegen eines Rohrbündels nach Anspruch 1 sein. Ein derartiges gattungsgemäßes Verfahren wird dadurch weiterentwickelt, daß beim Rückziehen des rotierenden Bohr-/Spülkopfes und Aufweiten des Bohrkanals die Drehbewegung des Bohr-/Spülkopfes mittels einer Einrichtung zur Drehentkopplung nicht auf das Rohrbündel übertragen und das Rohrbündel über Stabilisierungseinrichtungen im Inneren des Bohrkanals abgestützt in gleichbleibender räumlicher Lage der Rohre zueinander und zur Umgebung durch den Bohrkanal hindurch gezogen wird. Hierbei können in weiterer Ausgestaltung als Stabilisierung einrichtungen ein Aufweitkonus, insbesondere ein Aufweitkonus gemäß Anspruch 1, und Flansche zur Verbindung der Rohre zu einem Rohrbündel, insbesondere Flansche nach Anspruch 1, verwendet werden und das Rohrbündel in einer derartigen räumlichen Lage relativ zur Umgebung in den Bohrkanal eingezogen werden, die der Lage des Rohrbündels im eingezogenen Zustand entspricht.

Es ist von Vorteil, wenn Rohre aus durch Zugkräfte belastbaren Werkstoffen, vorzugsweise Rohre aus metallischen Materialien und/oder Rohre aus Kunststoffen wie PEHD oder PEX, eingezogen werden. Derartige Materialien sind im Rohrleitungsbau üblich.

Selbstverständlich ist es auch denkbar, daß in weiterer Ausgestaltung auch Rohre unterschiedlicher Durchmesser und/oder unterschiedlicher Verwendung in einem Arbeitsgang gemeinsam eingezogen werden. So können beispielsweise kombiniert in einem Rohrbündel Rohre für die Gasversorgung, die Elektrizitätsversorgung, die Wasserversorgung und auch die Telekommunikation sowie universell verwendbare Leerrohre gleichzeitig eingezogen werden.

Es ist weiterhin denkbar, daß das Rohrbündel von einer Vorratsrolle abgezogen und die Flansche vor dem Einziehen vormontiert werden. Insbesondere bei Kunststoffrohren, die ohne Probleme mit entsprechenden Rollradien aufgerollt werden können, ist es auch denkbar, daß die Flansche schon auf der Rolle vormontiert sind und damit an der Baustelle selbst nur noch wenig oder keine Vorbereitungen des Rohrbündels mehr getroffen werden müssen.

Eine andere Ausgestaltung sieht vor, daß die Rohre des Rohrbündels wie etwa bei metallischen Rohren aus einzelnen stangenförmigen Rohrabschnitten hergestellt und dann gleichzeitig mit dem Verbinden der stangenförmigen Rohrabschnitte auch die Flansche vor den Einziehen der Rohre vormontiert werden.

Eine besonders bevorzugte Ausführungsform des erfindungsgemäßen Rohrbündels sowie des erfindungsgemäßen Verfahrens zeigt die Zeichnung.

Es zeigen:
- Figur 1: - eine Ausgestaltung eines erfindungsgemäß gestalteten Rohrbündels mit daran angeordneten Zusatzeinrichtungen,
- Figur 2: - einen Querschnitt durch einen mittels der Bohr-/Spültechnik hergestellten Bohrkanal mit darin im Schnitt dargestellten Rohrbündel und Flansch.

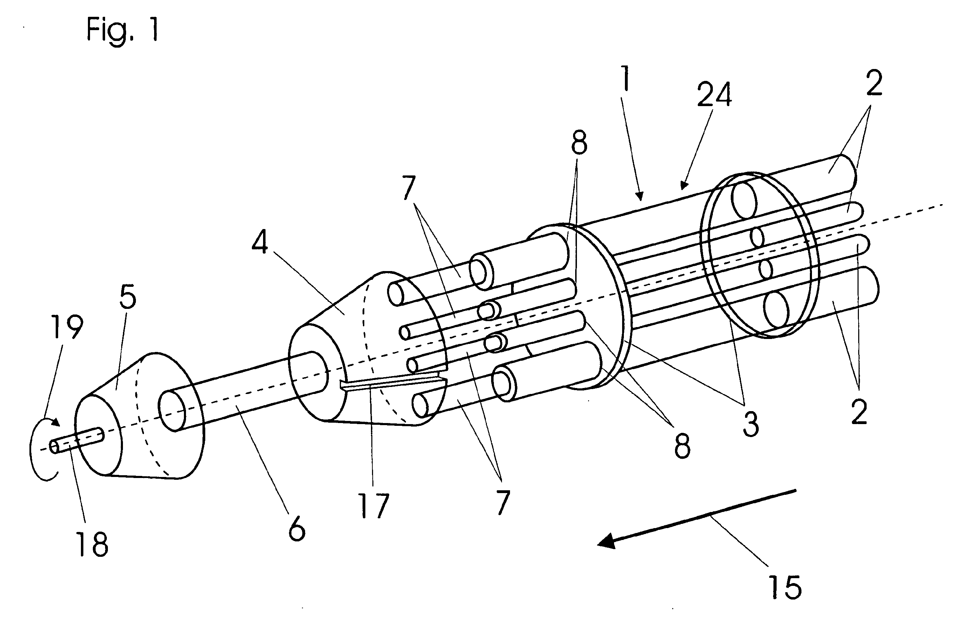

In der Figur 1 ist in sehr schematischer Darstellung der grundsätzliche Aufbau eines erfindungsgemäß gestalteten Rohrbündels 1 zu erkennen, wobei nur der vordere Abschnitt des durch die Rohre 2 gebildeten Rohrbündels 1 mit zwei daran angeordneten Flanschen 3 dargestellt ist. Das Rohrbündel 1 selber kann sich in der Richtung entgegen der Einzugsrichtung 15 in für die Bohr-/Spültechnik üblicher Länge erstrekken. Am linken Ende des Rohrbündels 1 ist ebenfalls nur schematisch angedeutet ein Böhr-/Spülkopf 5 in Form eines Aufweitkopfes zu erkennen, der über ein ebenfalls nur abschnittsweise dargestelltes Bohrgestänge 18 mit einem entsprechenden, nicht weiter dargestellten Antriebsaggregat verbunden ist. Der Bohr-/Spülkopf 5 dreht sich hierbei entlang der Drehrichtung 19 und fräst dabei im Aufweitverfahren einen in einem ersten Durchgang hergestellten Bohrkanal 9 weiter auf. Derartige Aufweitköpfe 5 sind grundsätzlich bekannt und sollen daher hier nicht weiter beschrieben werden.

Entgegen der Einzugsrichtung 15 des Rohrbündels 1 in den nicht weiter dargestellten Bohrkanal 9 ist hinter dem Aufweitkopf 5 eine Einrichtung 6 zur Drehentkopplung schematisch angedeutet, die beispielsweise aus einer oder einer Anzahl von drehgelenkigen Verbindungen bestehen kann, durch die gewährleistet ist, daß die Drehbewegung des Aufweitkopfes 5 entlang der Drehrichtung 19 nicht oder nur unwesentlich auf den hinter der Einrichtung 6 angeordneten Aufweitkonus 4 übertragen wird. Derartige Einrichtungen 6 zur Drehentkopplung sind beispielsweise aus dem Bereich der Anschlagmittel oder auch des allgemeinen Maschinenbaus vielfältig bekannt und sollen daher hier auch nicht weiter erläutert werden.

Hinter der Einrichtung 6 ist dann ein Aufweitkonus 4 zu erkennen, der hier einen ähnlichen Konuswinkel wie der Bohr-/Fräskopf 5 aufweist, gleichzeitig aber mit seinem größten Durchmesser ein wenig größer als der Bohr-/Fräskopf 5 ausgebildet ist. Der Aufweitkonus 4 hat beim Einziehen des Rohrbündels 1 mehrere Funktionen, die nachfolgend noch weiter erläutert werden. In dem Aufweitkonus 4 sind etwa regelmäßig am Umfang der Konusfläche verteilt Ausnehmungen 17 angeordnet, die beispielsweise in Form von Nuten ausgestaltet sein können. Diese verlaufen im wesentlichen über die ganze Länge der Konusfläche und dienen zu Abstützung des Aufweitkonus' 4 an den Wandungen 16 des Bohrkanals 9 beim Einziehen des Rohrbündels 1 in ebenfalls noch später ausgeführter Weise.

Hinter dem Aufweitkonus 4 ist eine Anzahl von Rohren 2, hier von vier Rohren 2 über ebenfalls nur schematisch angedeutete Anhängevorrichtungen 7 an der Rückseite des Aufweitkonus' 4 angeordnet. Die Anhängevorrichtungen 7 können beispielsweise hakenförmige Elemente aufweisen, die in entsprechende Gegenhaken eingreifen oder Einrichtungen entsprechend Karabinerhaken oder dergleichen. Entgegen der Einzugsrichtung 15 ist am rohrseitigen Ende der Anhängevorrichtungen 7 jeweils eine Festlegung an den einzelnen Rohren 2 vorgesehen, beispielsweise sind die Anhängevorrichtungen 7 an den Rohren 2 angeschweißt oder mit diesen auf sonstige grundsätzlich bekannte Art und Weise verbunden. Somit können die Kräfte, die von dem Bohrgestänge 18 beim Einziehen des Rohrbündels 1 in Richtung der Einzugsrichtung 15 auf das Rohrbündel 1 übertragen werden, von jedem der Rohre 2 aufgenommen werden. Es ist anzumerken, daß die Anordnung der Rohre 2 sowie deren Anzahl in der Figur 1 selbstverständlich völlig beliebig gewählt ist, so daß die Erfindung sich hinsichtlich der Ausgestaltung des Rohrbündels 1 auf sehr viele verschiedene Anordnungen und Anzahlen von Rohren 2 beziehen kann. Auch ist es denkbar, daß sich eine Übertragung der Erfindung auf das Einziehen allein eines Rohres 2 anbietet, wenn beispielsweise dieses Rohr 2 entsprechend empfindlich ist oder sonstige Randbedingungen möglichst eine Torsion des Rohres 2 unmöglich machen sollen.

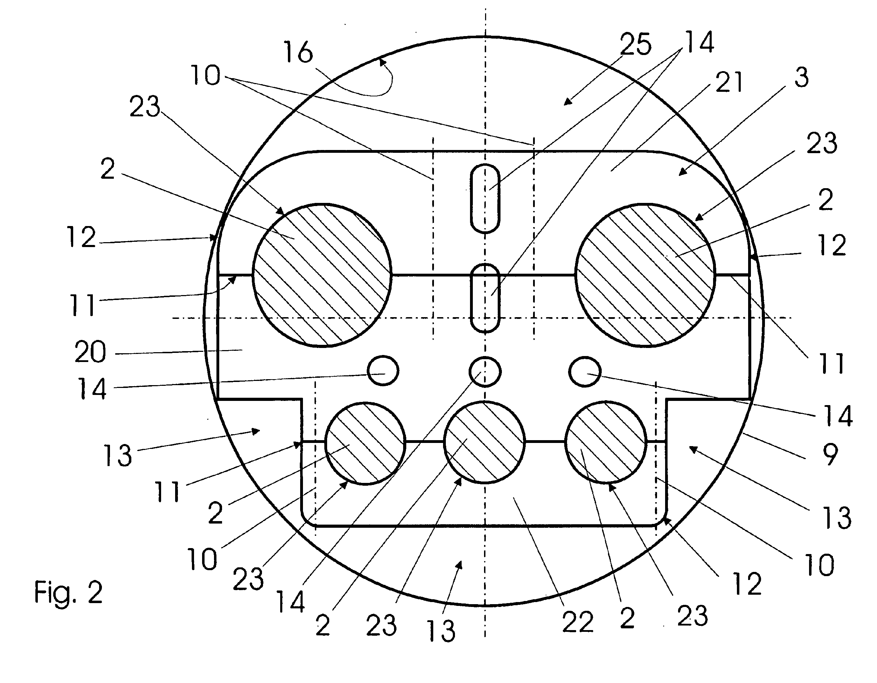

Die Rohre 2 des Rohrbündels 1 sind über zwei dargestellte Flansche 3 miteinander verbunden, deren Aufbau nur grob schematisch angedeutet ist und die in einer vorteilhaften Ausgestaltung in der Figur 2 noch näher erläutert werden. Die Flansche 3 weisen entsprechende Durchbrüche 8 für die Aufnahme der Rohre 2 auf, so daß die Flansche 3 die Rohre 2 des Rohrbündels 1 aufnehmen. Hierbei sind die Flansche 3 mindestens zweiteilig aufgebaut, so daß mindestens zwei Teile der Flansche 3 zum Montieren an dem Rohrbündel 1 bzw. zum Aufnehmen der Rohre 2 in den Durchbrüchen 8 auseinander gebaut werden können.

Zwischen den benachbart angeordneten Flanschen 3 ist noch vorab zu erwähnen, daß sich beim Einziehen des Rohrbündels 1 am Bohr-/Fräskopf 5 bildender Bohrschlamms entgegen der Einzugsrichtung 15 in den Bohrkanal 9 hinein preßt und dabei zum einen in den Ausnehmungen 17 im Aufweitkonus 4 verdichtet wird und gleichzeitig in der Figur 2 noch näher dargestellte Öffnungen 14 durchtritt, die in den Flanschen 3 vorgesehen sind. Hierdurch bildet sich zwischen den beiden benachbarten Flanschen 3 und selbstverständlich auch den in entgegen der Einzugsrichtung 15 dahinter angeordneten Flanschen 3 jeweils ein Schlammstauraum 24, der in noch näher beschriebener Weise wesentlich zur Stabilisierung der räumlichen Lage des Rohrbündels 1 beiträgt.

In der Figur 2 ist nun noch einmal in einer geschnittenen Draufsicht auf einen Flansch 3 dessen genauer Aufbau zu erkennen. Der Flansch 3 ist hierbei in einem Bohrkanal 9 angeordnet, der nach dem Auffräsen durch den Aufweitkopf 5 und dem Durchziehen des Aufweitkonus' 4 entstanden ist. Hierbei sind die größten Abmessungen jedes Flansches 3 im wesentlichen identisch mit den Abmessungen der Wandungen 16 des Bohrkanals 9, so daß jeder Flansch 3 zumindestens abschnittsweise an den Wandungen 16 des Bohrkanals 9 anliegt.

Der Flansch 3 ist hierbei im wesentlichen dreiteilig aufgebaut, wobei ein zentrales Mittelteil 20 zwischen dem größeren oberen und dem kleineren unten angeordneten Rohren 2 eingesteckt ist. Dabei sind in dem Mittelteil 20 jeweils halbkreisförmige Öffnungen 23 vorgesehen, in die die Rohre 2 eingelegt werden können. Jeweils oberseitig der oberen Rohre 2 und unterseitig der unteren Rohre 2 sind bügelartig ausgebildete weitere Teile des Flansches 3 zu erkennen, nämlich ein Oberteil 21 und ein Unterteil 22. In diesem Oberteil 21 und dem Unterteil 22 sind entsprechende ebenfalls halbkreisförmige Ausnehmungen 23 eingelassen, die mit den halbkreisförmigen Öffnungen 23 des Mittelteils 20 korrespondieren und diese zu einem vollen Kreis ergänzen. Die Durchmesser dieser Öffnungen 23 entsprechen im wesentlichen dem Durchmesser des jeweiligen Rohres 2, wobei die Maße so gewählt sind, daß nach dem Aufsetzen von Oberteil 21 und Unterteil 22 auf das Mittelteil 20 die Rohre 2 über klemmend wirkende Klemmschrauben 10 in dem nun komplettierten Flansch 3 kraftschlüssig gehalten sind. Hierbei ist darauf zu achten, daß die Rohre 2 nicht zu stark geklemmt werden, um keine Beschädigungen der Rohre 2 hervorzurufen. Mit dieser mehrteiligen Konstruktion des Flansches 3 ist es möglich, den Flansch 3 an beliebiger Stelle des Rohrbündels 1 auch noch kurz vor dem Einziehen in den Bohrkanal 9 anzuordnen und sicher zu befestigen. Auch ist eine Demontage beispielsweise in Baugruben relativ einfach möglich, da die Klemmschrauben 10 relativ gut zugänglich sind und daher der Flansch 3 leicht von den Rohren 2 entfernt werden kann.

Ebenfalls ist in der Figur 2 zu erkennen, daß der Flansch 3 nur abschnittsweise an den Wandungen 16 des Bohrkanals 9 anliegt, wobei unterhalb der oberen Rohre 2 Rücksprünge der Außenkontur des Flansches 3 zu erkennen sind, die sich in noch beschriebener Weise mit verdichtetem Bohrschlamm 13 zusetzen und die Lage des Flansches 3 und damit des Rohrbündels 1 innerhalb des Bohrkanals 9 stabilisieren. Oberhalb des Flansches 3 ist ein weitgehend freier Querschnitt 25 zu erkennen, der zum Abtransport des überflüssigen Bohrschlamms dient. Da das Rohrbündel 1 selbstverständlich ein entsprechendes Eigengewicht aufweist, wird sich der Flansch 3 im wesentlichen unterseitig im Bereich der mit den Sachnummern 12 bezeichneten Kanten und den seitlichen Bereichen neben den großen Rohren 2 an der Innenwandung 16 des Bohrkanals 9 abstützen. Schon allein hierdurch ist eine entsprechende Stabilisierung des Rohrbündels 1 zu erreichen, da über die Reibung zwischen der Außenkontur des Flansches 3 und den Wandungen 16 eine entsprechende Aufnahme von Torsionsbelastungen möglich ist, die als Reste der Drehbewegung entlang der Drehrichtung 19 des Bohr-/Fräskopfes 5 auf die Flansche 3 bzw. das Rohrbündel 1 übertragen werden kann.

Ebenfalls ist in der Figur 2 zu erkennen, daß in den Flanschen 3 Öffnungen 14 zum Durchtreten von Bohrschlamm aus dem Bereich in Einzugsrichtung 15 vor dem Flansch 3 in den Bereich in Einzugsrichtung 15 hinter den Flansch 3 vorgesehen sind. Diese Öffnungen 14, die selbstverständlich unterschiedlich gestaltet sein können, führen dazu, daß der unter hohem Druck im Bereich des Bohr-/Fräskopfes 5 entstehende Bohrschlamm den Schlammstauraum 24 zwischen einander benachbarten Flanschen 3 im wesentlichen ausfüllen kann und in diesem Schlammstauraum 24 das Rohrbündel 1 zusätzlich in seiner räumlichen Lage stabilisiert. Man kann sich diesen Bohrschlamm als eine Art Pfropfen vorstellen, der aus dem recht zähflüssigen, gleichzeitig noch verdichteten Bohrschlamm besteht und einer Drehung des Rohrbündels 1 aufgrund von aus dem Bohr-/Fräskopf 5 eingeleiteten Torsionsbelastung zäh entgegenwirkt. Selbstverständlich kann dieser Bohrschlamm im weiteren Verlauf des Bohrvorganges entgegen der Einzugsrichtung 15 durch die im nächsten Flansch 3 vorgesehenen Öffnungen 14 bzw. durch den freien Querschnitt 15 wieder austreten und nach hinten gefördert werden.

Der Bohrschlamm, der im Bereich des Bohr-/Fräskopfes 5 entsteht, wird sich ebenfalls im Bereich der Vorsprünge der Kontur des Flansches 3 unterhalb der großen Rohre 2 ansammeln und sich in diesem Bereich verfestigen, wodurch ebenfalls eine zusätzliche Abstützwirkung auf den Flansch 3 und damit auf das Rohrbündel 1 ausgeübt wird.

Eine weitere Abstützwirkung ergibt sich dadurch, daß der Aufweitkonus 4 beim Einziehen des Rohrbündels 1 in Einzugsrichtung 15 zumindestens mit den Bereichen des größten Durchmessers, die in der Regel ein wenig größer als der Durchmesser des Bohr-/Fräskopfes 5 ausgebildet sind, ebenfalls an den Wandungen 16 des Bohrkanals 9 anliegt und sich aufgrund der Zugbewegung gegen diese Wandungen 16 abstützt. Durch die zwischen den Wandungen 16 des Bohrkanals 9 und dem Aufweitkonus 4 sich ergebende Flächenpressung ist ebenfalls eine Aufnahme von Torsionsmomenten gewährleistet, gleichzeitig wird auch noch der Bohrkanal 9 in seinen Abmessungen kalibriert und damit das Durchtreten der Flansche 3 durch den Bohrkanal 9 verbessert.

Allgemein läßt sich die besondere Konstruktion des Rohrbündels 1 bzw. auch der Ablauf des erfindungsgemäßen Verfahrens so beschreiben, daß durch die vorstehend beschriebenen Maßnahmen zur Stabilisierung des Rohrbündels 1 in dem Bohrkanal 9 dafür gesorgt wird, daß unabhängig von der Drehung des Bohr-/Fräskopfes 5 das Rohrbündel 1 seiner räumlichen Lage innerhalb des Bohrkanales strikt beibehält, nämlich diejenige räumliche Lage aufrechterhält, in der das Rohrbündel 1 in den Bohrkanal 9 anfänglich eingeführt wurde. Dies hat den großen Vorteil, daß die räumliche Lage des Rohrbündels 1 entlang des Bohrkanals 9 immer identisch bleibt und durch die Wirkung der Flansche 3 auch der Abstand der Rohre 2 zueinander immer gleich bleibt. Hierdurch ist zum einen eine unzulässige Belastung der Rohre 2 durch Torsion sicher verhindert, zum anderen sind die Anschlußverhältnisse etwa zum Anschließen von Abzweigungen an den Rohren 2 entlang des Bohrkanals 9 immer dieselben. Daher kann es beispielsweise nicht passieren, daß etwa die großen Rohre 2 durch eine Verdrehung so unterhalb der kleinen Rohre 2 zu liegen kommen, daß ein Anschluß eines Verbrauchers oder dgl. nicht oder nur sehr aufwendig möglich ist.

### Sachnummernliste

- 1 -: Rohrbündel
- 2 -: Rohre
- 3 -: Flansch
- 4 -: Aufweitkonus
- 5 -: Bohr-/Spülkopf
- 6 -: Drehentkopplung
- 7 -: Anhängevorrichtung
- 8 -: Klemmaugen
- 9 -: Bohrkanal
- 10 -: Klemmschraube
- 11 -: Trennfuge
- 12 -: Abstützung
- 13 -: verdichteter Bohrschlamm
- 14 -: Durchtrittsöffnungen für Bohrschlamm
- 15 -: Einzugsrichtung
- 16 -: Wandungen Bohrkanal
- 17 -: Ausnehmungen
- 18 -: Bohrgestänge
- 19 -: Drehbewegung Bohr-/Spülkopf
- 20 -: Mittelteil Flansch
- 21 -: Oberteil Flansch
- 22 -: Unterteil Flansch
- 23 -: Öffnungen für Rohre
- 24 -: Schlammstauraum
- 25 -: freier Querschnitt

## Patentansprüche

1. Rohrbündel (1) zur Verlegung von Rohren (2) mittels grabenloser Verlegung nach dem Bohr-Spülverfahren, bei dem in einem ersten Bohrvorgang ein Bohrkanal (9) erzeugt und beim Rückziehen eines dem Rohrbündel (1) zugeordneten Bohr-/Spülkopfes (5) dieser Bohrkanal (9) aufgeweitet und dabei das Rohrbündel (1) in den Bohrkanal (9) eingezogen wird,
**dadurch gekennzeichnet, daß**
das Rohrbündel (1) aus einer Anzahl von einzelnen Rohren (2) über in Längsrichtung (15) der Rohre (2) in Abständen an den Rohren (2) angeordnete und die Rohre (2) zueinander beabstandende Flansche (3) gebildet ist, wobei die Flansche (3) auch gegenüber Belastungen in Längsrichtung der Rohre (2) beim Einziehen des Rohrbündels (1) in den Bohrkanal (9) gesichert sind und an dem rotierenden Bohr-/Spülkopf (5) ein nicht mitrotierende, mit dem Rohrbündel (1) verbundener Aufweitkonus (4) derart angeordnet ist, daß der Aufweitkonus (4) beim Rückziehen den vom Bohr-/Spülkopf (5) erzeugten Bohrkanal (9) auf für das Verlegen des Rohrbündels (1) benötigte Querschnittsmaße aufweitet und die räumliche Lage des Rohrbündels (1) relativ zur Umgebung stabilisiert.

2. Rohrbündel (1) gemäß Anspruch 1, **dadurch gekennzeichnet, daß** der Aufweitkonus (4) sich beim Einziehen der Rohre (2) flächig an die von dem Bohr-/Spülkopf (5) erzeugten, mit Schlamm bedeckten Wandungen (16) des Bohrkanals (9) anpreßt und an diesen abstützt und die räumliche Lage des Aufweitkonus' (4) relativ zur Umgebung stabilisiert ist.

3. Rohrbündel (1) gemäß einem der vorstehenden Ansprüche, **dadurch gekennzeichnet, daß** der Aufweitkonus (4) eine Anzahl, vorzugsweise symmetrisch, am Umfang verteilter, im wesentlichen axialer Ausnehmungen (17) aufweist, die durch den hier in Längsrichtung (15) des Bohrkanales (9) durchtretenden Bohrschlamm die räumliche Lage des Aufweitkonus' (4) relativ zur Umgebung stabilisieren.

4. Rohrbündel (1) gemäß einem der vorstehenden Ansprüche, **dadurch gekennzeichnet, daß** zwischen Bohr-/Spülkopf (5) und Aufweitkonus (4) mindestens eine Einrichtung (6) zur Drehentkopplung angeordnet ist, die die Drehbewegung (19) des Bohr-/Spülkopfes (5) von dem mit dem Aufweitkonus (4) verbundenen Rohrbündel (1) entkoppelt.

5. Rohrbündel (1) gemäß einem der vorstehenden Ansprüche, **dadurch gekennzeichnet, daß** die Flansche (3) Abmessungen aufweisen, die kleiner sind oder zumindest abschnittsweise im wesentlichen dem Querschnitt des größten Durchmessers des Aufweitkonus' (4) entsprechen.

6. Rohrbündel (1) gemäß einem der vorstehenden Ansprüche, **dadurch gekennzeichnet, daß** die Flansche (3) im wesentlichen plattenförmig ausgebildet und senkrecht zur Längsrichtung (15) der Rohre (2) an diesen festgelegt sind.

7. Rohrbündel (1) gemäß einem der vorstehenden Ansprüche, **dadurch gekennzeichnet, daß** die Flansche (3) im wesentlichen mindestens zwei plattenförmige Einzelteile (20, 21, 22) aufweisen, wobei in die jeweiligen Einzelteile (20, 21, 22) jeweils einander ergänzende, im wesentlichen halbkreisförmige Öffnungen (23) eingebracht sind, in die die Rohre (2) einlegbar und durch das jeweils zugehörige andere Einzelteil (20, 21, 22), die Rohre (2) klemmend, verschließbar sind.

8. Rohrbündel (1) gemäß Anspruch 7, **dadurch gekennzeichnet daß** die mindestens zwei plattenförmigen Einzelteile (20, 21, 22) der Flansche (3) miteinander verschraubbar (10) oder verklemmbar oder verklebbar ausgebildet sind.

9. Rohrbündel (1) gemäß einem der vorstehenden Ansprüche, **dadurch gekennzeichnet, daß** die Flansche (3) in im wesentlichen regelmäßigen Abständen an den Rohren (2) zur Bildung des Rohrbündels (1) angeordnet sind.

10. Rohrbündel (1) gemäß Anspruch 9, **dadurch gekennzeichnet, daß** die Flansche (3) nahe an dem Aufweitkonus (4) in geringerem Abstand, hier vorzugsweise im wesentlichen zwischen 0,5 - 2 Meter, zueinander angeordnet sind als in Einziehrichtung (15) weiter hinter dem Aufweitkonus (4), hier vorzugsweise im wesentlichen zwischen 3 - 6 Meter.

11. Rohrbündel (1) gemäß einem der vorstehenden Ansprüche, **dadurch gekennzeichnet, daß** die Flansche (3) nach dem Einziehen in den Bohrkanal (9) an dem Rohrbündel (1) festgelegt verbleiben.

12. Rohrbündel (1) gemäß einem der Ansprüche 1 bis 10, **dadurch gekennzeichnet, daß** die Flansche (3) derart an dem Rohrbündel (1) festlegbar sind, daß sie nach dem Einziehen des Rohrbündels (1) in den Bohrkanal (9) in von der Oberfläche jeweils vorgetriebenen Entspannungsgruben zu liegen kommen und wieder zugänglich von dem Rohrbündel (1) demontierbar sind.

13. Rohrbündel (1) gemäß einem der vorstehenden Ansprüche, **dadurch gekennzeichnet, daß** in den Flanschen (3) Öffnungen (14) in dem von den Rohren (2) umgrenzten Bereich der Flansche (3) derart angeordnet sind, daß von dem Bohr-/Spülkopf (5) erzeugter Bohrschlamm in den zwischen zwei zueinander benachbarten Flanschen (3) gebildeten Raum (24) eintreten und diesen im wesentlichen ausfüllen kann.

14. Rohrbündel (1) gemäß Anspruch 13, **dadurch gekennzeichnet, daß** der in den zwischen zwei zueinander benachbarten Flanschen (3) gebildeten Raum (24) eingetretene Bohrschlamm einen Druckaufbau in diesem Raum (24) bewirkt, der das Rohrbündel (1) in seiner räumlichen Lage zur Umgebung stabilisiert.

15. Rohrbündel (1) gemäß einem der vorstehenden Ansprüche, **dadurch gekennzeichnet, daß** die Außenkanten der Flansche (3) sich an den von dem Aufweitkopf (4) erzeugten Wandungen (16) des Bohrkanales derart (9) abstützen, daß die Flansche (3) und die daran festgelegten Rohre (2) beim Einziehen des Rohrbündels (1) von der Innenwandung (16) des Bohrkanales (9) geführt entlang gleiten.

16. Rohrbündel (1) gemäß einem der vorstehenden Ansprüche, **dadurch gekennzeichnet, daß** der Bohrschlamm als Gleitmittel bei der Bewegung der Flansche (3) auf den Wandungen (16) des Bohrkanals (9) wirkt.

17. Rohrbündel (1) gemäß einem der vorstehenden Ansprüche, **dadurch gekennzeichnet, daß** die Umrißform der Flansche (3) unregelmäßig ausgebildet ist.

18. Rohrbündel (1) gemäß Anspruch 17, **dadurch gekennzeichnet, daß** die unregelmäßige Umrißform der Flansche (3) eine Verfestigung des Bohrschlamms angrenzend an diese unregelmäßigen Formen bewirkt, wodurch die Flansche (3) von diesem verfestigten Bohrschlamm (13) gegen Verdrehungen geführt an der Innenwandung (16) des Bohrkanals (9) entlanggleiten.

19. Verfahren zum parallelen Verlegen von Rohren (2) mittels grabenloser Verlegung nach dem Bohr-Spülverfahren, bei dem in einem ersten Bohrvorgang ein Bohrkanal (9) aufgespült und beim Rückziehen des Bohr-/Spülkopfes (5) dieser Bohrkanal (9) aufgeweitet und dabei ein Rohrbündel (1) in den Bohrkanal (9) eingezogen wird, insbesondere Verfahren zum Verlegen eines Rohrbündels (1) nach Anspruch 1,
**dadurch gekennzeichnet, daß**
beim Rückziehen des rotierenden Bohr-/Spülkopfes (5) und Aufweiten des Bohrkanals (9) die Drehbewegung des Bohr-/Spülkopfes (5) mittels einer Einrichtung (6) zur Drehentkopplung nicht auf das Rohrbündel (1) übertragen und das Rohrbündel (1) über Stabilisierungseinrichtungen (3, 4 17) im Inneren des Bohrkanals abgestützt in gleichbleibender räumlicher Lage der Rohre (2) zueinander und zur Umgebung durch den Bohrkanal (9) hindurch gezogen wird.

20. Verfahren gemäß Anspruch 19, **dadurch gekennzeichnet, daß** als Stabilisierungseinrichtungen (3, 4, 17) ein Aufweitkonus (4), insbesondere ein Aufweitkonus (4) gemäß Anspruch 1, und Flansche (3) zur Verbindung der Rohre (2) zu einem Rohrbündel (1), insbesondere Flansche (3) nach Anspruch 1, verwendet werden.

21. Verfahren gemäß einem der Ansprüche 19 oder 20, **dadurch gekennzeichnet, daß** das Rohrbündel (1) in einer derartigen räumlichen Lage relativ zur Umgebung in den Bohrkanal (9) eingezogen wird, die der Lage des Rohrbündels (1) im eingezogenen Zustand entspricht.

22. Verfahren gemäß einem der Ansprüche 19 bis 21, **dadurch gekennzeichnet, daß** Rohre (2) aus durch Zugkräfte belastbaren Werkstoffen, vorzugsweise Rohre (2) aus metallischen Materialien und/oder Rohre aus Kunststoffen wie PEHD oder PEX, eingezogen werden.

23. Verfahren gemäß einem der Ansprüche 19 bis 22, **dadurch gekennzeichnet, daß** Rohre (2) unterschiedlicher Durchmesser und/oder unterschiedlicher Verwendung in einem Arbeitsgang gemeinsam eingezogen werden.

24. Verfahren gemäß einem der Ansprüche 19 bis 23, **dadurch gekennzeichnet, daß** das Rohrbündel (1) von einer Vorratsrolle abgezogen und die Flansche (3) vor dem Einziehen vormontiert werden.

25. Verfahren gemäß einem der Ansprüche 19 bis 23, **dadurch gekennzeichnet, daß** das Rohrbündel (1) aus einzelnen stangenförmigen Rohrabschnitten hergestellt und dann die Flansche (3) vor den Einziehen vormontiert werden.

## Claims

1. A bundle (1) of tubes for the laying of tubes (2) by means of a trenchless laying according to the fluid-assisted drilling method, in which in a first drilling process a drilling channel (9) is generated and during the retracting movement of the boring-flushing head (5) assigned to the bundle (1) of tubes (2) this drilling channel (9) is expanded and in this process the bundle (1) of tubes is retracted into the drilling channel (9),
**characterized in that**
the bundle (1) of tubes is formed by a number of single tubes (2) which are ordered in distance to each other by means of flanges (3) distantly arranged at the tubes (2) in lengthwise direction (15) of the tubes (2), wherein the flanges (3) are secured also against charges in lengthwise direction of the tubes (2) during the pulling-in of the bundle (1) of tubes into the drilling channel (9) and at the rotating boring-flushing head (5) a non co-rotating expanding cone (4), which is connected to the bundle (1) of tubes, is arranged in such a manner, that the expanding cone (4) expands during the pulling back the drilling channel (9) generated by the boring-flushing head (5) to the needed crosscut dimensions for the laying of the bundle (1) of tubes and stabilizes the spatial position of the expanding cone (4) relative to the surroundings.

2. A bundle (1) of tubes according to claim 1, **characterized in that** the expanding cone (4) presses flat against the walls (16) of the drilling channel (9) covered with mud and generated by the boring-flushing head (5) and is supported by these walls (16) and stabilizes the spatial position of the expanding cone (4) relative to the surroundings.

3. A bundle (1) of tubes according to one of the preceding claims, **characterized in that** the expanding cone (4) shows a number of, preferably symmetric, essentially axial recesses (17), distributed at the periphery, which stabilizes the spatial position of the expanding cone (4) relative to the surroundings by means of the drilling mud, which penetrates here in lengthwise direction (15) of the drilling channel (9).

4. A bundle (1) of tubes according to one of the preceding claims, **characterized in that** between the boring-flushing head (5) and the expanding cone (4) at least one device (6) for rotary decoupling is arranged, which decouples the rotary movement (19) of the boring-flushing head (5) from the bundle (1) of tubes connected to the expanding cone (4).

5. A bundle (1) of tubes according to one of the preceding claims, **characterized in that** the flanges (3) show dimensions, which are smaller or correspond at least in sections essentially to the cross-section of the largest diameter of the expanding cone (4).

6. A bundle (1) of tubes according to one of the preceding claims, **characterized in that** the flanges (3) are formed essentially plate-shaped and are secured to the tubes (2) perpendicular to the lengthwise direction (15) of the tubes (2).

7. A bundle (1) of tubes according to one of the preceding claims, **characterized in that** the flanges (3) show essentially at least two plate-shaped component parts (20, 21, 22), in which in the respective component parts (20, 21, 22) supplementary, essentially semicircular openings (23) are provided, in which the tubes (2) can be inserted and which are closable by the respectively accompanying other component part (20, 21, 22) sticking the tubes (2).

8. A bundle (1) of tubes according to claim 7, **characterized in that** the at least two plate-shaped component parts (20, 21, 22) of the flanges (3) can be screwed together (10) or stucked together or glued together.

9. A bundle (1) of tubes according to one of the preceding claims, **characterized in that** the flanges (3) are arranged in essentially regular distances at the tubes (2) on behalf of forming the bundle (1) of tubes.

10. A bundle (1) of tubes according to claim 9, **characterized in that** the flanges (3) near to the expanding cone (4) are arranged in a smaller distance to each other, here preferably essentially between 0.5 - 2 metres, as in the pull-in direction (15) further behind the expanding cone (4), here preferably essentially between 3-6 metres.

11. A bundle (1) of tubes according to one of the preceding claims, **characterized in that** the flanges (3) stay fixed to the bundle (1) of tubes after pulling-in into the drilling channel (9).

12. A bundle (1) of tubes according to one of the claims 1 to 10, **characterized in that** the flanges (3) can be fixed to the bundle (1) of tubes in such a manner, that after pulling-in them into the drilling channel (9) the flanges (3) come to lie in stress-relieving pits driven down from the surface and can be accessibly dismantled from the bundle (1) of tubes again.

13. A bundle (1) of tubes according to one of the preceding claims, **characterized in that** in the flanges (3) openings (14) in the region of the flanges (3) surrounded by the tubes (2) are provided in such a manner, that mud generated by the boring-flushing head (5) can enter the space (24) between two adjacent flanges (3) and essentially body it out.

14. A bundle (1) of tubes according to claim 13, **characterized in that** the mud bodying out the space (24) formed between two adjacent flanges (3) causes a pressure build-up in this space (24), which stabilizes the bundle (1) of tubes on behalf of its spatial position relative to the surroundings.

15. A bundle (1) of tubes according to one of the preceding claims, **characterized in that** the outer edges of the flanges (3) are supported by the walls (16) of the drilling channel (9) formed by the expanding cone (4) in such a manner, that the flanges (3) and the hereto fixed tubes (2) during the pulling-in of the bundle (1) of tubes are guided during gliding by the inner wall (16) of the drilling channel (9).

16. A bundle (1) of tubes according to one of the preceding claims, **characterized in that** the mud operates as antiseize agent during the movement of the flanges (3) on the walls (16) of the drilling channel (9).

17. A bundle (1) of tubes according to one of the preceding claims, **characterized in that** the outer profile of the flanges (3) is formed irregular.

18. A bundle (1) of tubes according to claim 17, **characterized in that** the irregular outer profile of the flanges (3) causes a hardening of the mud adjacent to these irregular forms, by which the flanges (3) glide guided against torsion by this hardened mud along the inner wall (16) of the drilling channel (9).

19. Procedure for the parallel laying of tubes (2) by means of a trenchless laying according to the fluid-assisted drilling method, in which in a first drilling process one drilling channel (9) is generated and during the retracting movement of the boring-flushing head (5) this drilling channel (9) is expanded and in this process a bundle (1) of tubes is retracted into the drilling channel (9), especially procedure for the laying of a bundle (1) of tubes according to claim 1,
**characterized in that**
during the retraction of the rotating boring-flushing head (5) and expanding of the drilling channel (9) the rotary movement of the boring-flushing head (5) is not transmitted to the bundle (1) of tubes by means of a device (6) for rotary decoupling and the bundle (1) of tubes is pulled through the drilling channel (9) supported in constant spatial position of the tubes (2) to each other and to the surroundings by means of stabilizing devices (3, 4, 17) inside the drilling channel (9).

20. Procedure according to claim 19, **characterized in that** as stabilizing devices (3, 4, 17) are used an expanding cone (4), especially an expanding cone (4) according to claim 2, and flanges (3) for the connection of the tubes (2) to a bundle (1) of tubes, especially flanges (3) according to claim 1.

21. Procedure according to one of the claims 19 or 20, **characterized in that** the bundle (1) of tubes is pulled into the drilling channel (9) in such a spatial position relative to the surroundings, which corresponds to the spatial position of the bundle (1) of tubes in the pulled-in state.

22. Procedure according to one of the claims 19 to 21, **characterized in that** tubes (2) consisting of materials capable of bearing tensile forces are pulled in, preferably tubes (2) made of metallic materials and/or tubes made of synthetic materials like PEHD or PEX.

23. Procedure according to one of the claims 19 to 22, **characterized in that** tubes (2) with different diameters and/or different usage are pulled in in one common pass.

24. Procedure according to one of the claims 19 to 23, **characterized in that** the bundle (1) of tubes is pulled off a feed roll and the flanges (3) are pre-assembled before the pulling in.

25. Procedure according to one of the claims 19 to 23, **characterized in that** the bundle (1) of tubes is manufactured of single bar-shaped tube sections and than the flanges (3) are pre-assembled before the pulling in.

## Revendications

1. Faisceau tubulaire (1) pour la pose de tuyaux (2) sans tranchées selon la méthode du forage par injection, au cours de laquelle un canal de forage (9) est créé lors de la première étape de forage, puis ce canal de forage (9) est élargi par le retrait d'une tête d'injection/de forage (5) attribuée au faisceau tubulaire (1) et ainsi le faisceau tubulaire (1) est tiré dans le canal de forage (9),
**caractérisé en ce que**
le faisceau tubulaire (1) est formé d'un nombre de tuyaux individuels (2) au moyen de brides (3) placées de manière espacée sur la longueur (15) des tuyaux (2) et servant à espacer les tuyaux (2) les uns des autres, les brides (3) étant aussi assurées contre les charges exercées sur la longueur des tuyaux (2) lors du passage du faisceau tubulaire (1) dans le canal de forage (9) et un cône d'élargissement (4) non rotatif et relié au faisceau tubulaire (1) étant placé à la tête d'injection/de forage (5) rotative de telle manière que le cône d'élargissement (4) élargit le canal de forage à la section transversale nécessaire pour la pose du faisceau tubulaire (1) lorsqu'il est retiré du canal de forage (9) créé par la tête d'injection/de forage (5) et ainsi stabilise la situation spatiale du faisceau tubulaire (1) par rapport aux alentours.

2. Le faisceau tubulaire (1) selon la revendication 1, **caractérisé en ce que** le cône d'élargissement (4) se presse à plat contre les parois (16) du canal de forage (9) couvertes de boue et créées par la tête d'injection/de forage (5) lors du passage des tuyaux (2) et s'appuie contre le canal de forage et ainsi stabilise relativement la situation spatiale du cône d'élargissement (4) par rapport aux alentours.

3. Le faisceau tubulaire (1) selon une des revendications précédentes, **caractérisé en ce que** le cône d'élargissement (4) présente un nombre de creux (17) essentiellement axiaux répartis sur le pourtour, de préférence symétriques, lesquels stabilisent relativement la situation spatiale du cône d'élargissement (4) par rapport aux alentours au moyen de la boue de forage qui passe au travers sur la longueur (15) du canal de forage (9).

4. Le faisceau tubulaire (1) selon une des revendications précédentes, **caractérisé en ce qu'**au moins un dispositif (6) de découplage rotatif soit placé entre la tête d'injection/de forage (5) et le cône d'élargissement (4), lequel découple le mouvement rotatif (19) de la tête d'injection/de forage (5) du faisceau tubulaire (1) relié au cône d'élargissement (4).

5. Le faisceau tubulaire (1) selon une des revendications précédentes, **caractérisé en ce que** les brides (3) présentent des dimensions plus petites ou qui correspondent en grande partie, au moins par sections, à la section du plus grand diamètre du cône d'élargissement (4).

6. Le faisceau tubulaire (1) selon une des revendications précédentes, **caractérisé en ce que** les brides (3) sont essentiellement en forme de plaques et fixées aux tuyaux à la verticale dans le sens de la longueur (15) des tuyaux (2).

7. Le faisceau tubulaire (1) selon une des revendications précédentes, **caractérisé en ce que** les brides (3) présentent pour l'essentiel au moins deux éléments distincts en forme de plaques (20, 21, 22), dont chacun des éléments distincts (20, 21, 22) comporte deux ouvertures (23) essentiellement semi-circulaires se complétant et dans lesquelles on peut poser les tuyaux (2) et les verrouiller en coinçant les tuyaux (2) à l'aide de l'autre élément complémentaire (20, 21, 22).

8. Le faisceau tubulaire (1) selon la revendication 7, **caractérisé en ce qu'**au moins deux éléments distincts en forme de plaques (20, 21, 22) des brides (3) puissent être vissés (10) ou coincés ou collés ensemble.

9. Le faisceau tubulaire (1) selon une des revendications précédentes, **caractérisé en ce que** les brides (3) sont placées contre les tuyaux (2) à intervalles essentiellement réguliers afin de former le faisceau tubulaire (1).

10. Le faisceau tubulaire (1) selon la revendication 9, **caractérisé en ce que** les brides (3) sont placées à proximité du cône d'élargissement (4) à un intervalle plus faible, de préférence essentiellement entre 0,5 et 2 mètres, que dans le sens du passage (15) où elles sont plus éloignées du cône d'élargissement (4), ici de préférence essentiellement entre 3 et 6 mètres.

11. Le faisceau tubulaire (1) selon une des revendications précédentes, **caractérisé en ce que** les brides (3) restent fixées au faisceau tubulaire (1) après le passage dans le canal de forage (9).

12. Le faisceau tubulaire (1) selon une des revendications 1 à 10, **caractérisé en ce que** les brides (3) peuvent être fixées au faisceau tubulaire (1) de manière à ce qu'elles viennent se poser dans les fosses de détente creusées depuis la surface après le passage du faisceau tubulaire (1) dans le canal de forage (9) et soient démontables du faisceau tubulaire (1) à nouveau accessible.

13. Le faisceau tubulaire (1) selon une des revendications précédentes, **caractérisé en ce que** des ouvertures (14) soient placées dans les brides (3) dans l'espace des brides entouré par les tuyaux (2) de telle manière que la boue de forage produite par la tête d'injection/de forage (5) puisse entrer dans l'espace (24) formé entre deux brides voisines et le remplir en grande partie.

14. Le faisceau tubulaire (1) selon la revendication 13, **caractérisé en ce que** la boue de forage entrée dans l'espace (24) formé entre deux brides voisines entraîne une montée en pression dans cet espace (24), laquelle stabilise le faisceau tubulaire (1) dans sa situation spatiale par rapport aux alentours.

15. Le faisceau tubulaire (1) selon une des revendications précédentes, **caractérisé en ce que** les bords extérieurs des brides (3) s'appuient aux parois (16) du canal de forage (9) produites par la tête d'élargissement (4) de telle manière que les brides (3) et les tuyaux (2) qui leur sont fixés soient guidés et glissent le long de la paroi interne (16) du canal de forage (9) lors du passage du faisceau tubulaire (1).

16. Le faisceau tubulaire (1) selon une des revendications précédentes, **caractérisé en ce que** la boue de forage serve de lubrifiant lors du déplacement des brides (3) sur les parois (16) du canal de forage (9).

17. Le faisceau tubulaire (1) selon une des revendications précédentes, **caractérisé en ce que** le contour des brides (3) soit irrégulier.

18. Le faisceau tubulaire (1) selon la revendication 17, **caractérisé en ce que** le contour irrégulier des brides (3) entraîne la consolidation de la boue de forage de manière adjacente à ces formes irrégulières, ce qui permet aux brides (3) de glisser le long de la paroi intérieure (16) du canal de forage (9) tout en étant guidées par cette boue consolidée (13) contre les distorsions.

19. Procédé de pose parallèle de tuyaux (2) sans tranchées selon la méthode du forage par injection, au cours de laquelle un canal de forage est injecté au cours de la première étape de forage et élargi lors du passage de la tête d'injection/de forage (5) dans ce canal de forage (9), simultanément un faisceau tubulaire (1) est tiré dans le canal de forage (9), plus particulièrement le procédé de pose d'un faisceau tubulaire (1) selon la revendication 1,
**caractérisé en ce que**
lors du passage de la tête d'injection/de forage rotative (5) et de l'élargissement du canal de forage (9), le mouvement rotatif de la tête d'injection/de forage (5) rotatif n'est pas transmis au faisceau tubulaire (1) grâce à un dispositif (6) de découplage rotatif et le faisceau tubulaire (1) est tiré dans le canal de forage (9) avec la situation spatiale des tuyaux (2) restant identique entre eux et par rapport aux alentours, à l'aide de dispositifs stabilisateurs (3, 4 et 17) s'appuyant à l'intérieur du canal de forage (9).

20. Le procédé selon la revendication 19, **caractérisé en ce que** un cône d'élargissement (4), plus particulièrement un cône d'élargissement (4) selon la revendication 1, et des brides (3) reliant les tuyaux (2) en un faisceau tubulaire (1), plus particulièrement des brides (3) selon la revendication 1, sont utilisés en guise de dispositifs stabilisateurs (3, 4, 17).

21. Le procédé selon une des revendications 19 ou 20, **caractérisé en ce que** le faisceau tubulaire (1) est tiré dans le canal de forage (9) dans une situation spatiale stable par rapport aux alentours correspondant à la situation du faisceau tubulaire (1) lorsqu'il est posé.

22. Le procédé selon une des revendications 19 à 21, **caractérisé en ce que** les tuyaux (2) faits de matériaux résistants aux forces de traction, de préférence des tuyaux (2) en matériaux métalliques et/ou des tuyaux en matières plastiques, telles que le PEHD ou le PEX sont tirés.

23. Le procédé selon une des revendications 19 à 22, **caractérisé en ce que** des tuyaux (2) de diamètre différent et/ou d'utilisation différente sont tirés au cours d'une seule opération.

24. Le procédé selon une des revendications 19 à 23, **caractérisé en ce que** le faisceau tubulaire (1) est tiré d'une bobine de stockage et les brides (3) sont prémontées avant le passage du faisceau.

25. Le procédé selon une des revendications 19 à 23, **caractérisé en ce que** le faisceau tubulaire (1) est composé de diverses sections de tuyaux en forme de barre et qu'ensuite les brides (3) sont prémontées avant le passage du faisceau.
